# EUROPEAN PATENT APPLICATION

(11) **EP 2 081 127 A1**
(43) Date of publication of application: **22.07.2009**
(21) Application number: 08105697.0
(22) Date of filing: 30.10.2008
(51) Int. Cl.: G06F 21/24, G06F 3/06

(54) **Controller for controlling logical volume-related settings**

(30) Priority: 08.01.2008 JP 2008001185
(71) Applicant: Hitachi Ltd., Chiyoda-ku Tokyo (JP)
(72) Inventor: Murayama, Koichi, Tokyo 100-8220 (JP); Osaki, Nobuyuki, Tokyo 100-8220 (JP); Kito, Daisuke, Tokyo 100-8220 (JP)
(74) Representative: Borchert, Uwe Rudolf

(57) **Abstract**

A controller carries out a first determination as to whether or not data to be stored in a target logical volume can be used by a plurality of access devices. The controller carries out a second determination as to whether or not the access devices comprise data encryption units respectively when the result of the first determination is affirmative. The controller controls a setting related to the target logical volume for one access device of the plurality of access devices, based on the result of the second determination.

## Description

The present invention relates to technology for controlling the settings related to a logical volume provided by a storage system.

Interest in data security measures aimed at preventing unauthorized access and protecting data has risen in recent years. Important data, such as personal information on company employees and customer information, is stored in a storage device comprising a plurality of storage media drives, and technology for protecting the data stored in the storage device is deemed necessary. Japanese Patent Laid-open No. 2005-322201 discloses technology for encrypting data inside a storage device. According to the technology disclosed in Japanese Patent Laid-open No. 2005-322201, even if the storage media drive (for example, a hard disk drive (HDD)) inside the storage device should be stolen, the risk of a data leak is reduced because the data stored in the storage media drive is encrypted.

In a system configuration in which a plurality of storage devices coexist, the plurality of devices may be able to access the same data (the logical volume (logical VOL) that stores the data). For example, one logical VOL may be allocated to respective logical VOL (for example, virtual VOL, which are virtual logical VOL) comprised by the plurality of storage devices. In a case like this, the respective storage devices, which comprise the virtual VOL to which the common logical VOL (hereinafter, "common logical VOL") is allocated (hereinafter the "common logical VOL access device"), can access the same data (that is, the data of the common logical VOL).

In this case, when a common logical VOL access device encrypts the data stored in the common logical VOL, all of the plurality of common logical VOL access devices must employ the same encryption method, and must be able to carry out the encryption and decryption of this data. This is because, if the respective common logical VOL access devices employ different encryption methods to encrypt and decrypt the data of the common logical VOL, there is the danger of the data stored in the common logical VOL being destroyed. Further, if there is a common logical VOL access device that does not have functions for encrypting and decrypting data (encryption functions), this common logical VOL access device, which lacks encryption functions, could carry out the same processing relative to encrypted data stored in the common logical VOL as the processing carried out for plaintext data. In this case as well, there is the danger of the data stored in the common logical VOL being destroyed the same as mentioned hereinabove.

Accordingly, an object of the present invention is to enable the carrying out of appropriate settings so that the data stored in a logical volume will not be destroyed.

A controller carries out a first determination as to whether or not data stored in a target logical volume can be used in a plurality of access devices. When the result of the above-mentioned first determination is affirmative, the controller carries out a second determination as to whether or not the respective access devices comprise data encryption units. On the basis of the result of the above-mentioned second determination, the controller controls the settings related to the above-mentioned target logical volume relative to one access device of the above-mentioned plurality of access devices.

### Embodiments of the invention are now described with reference to the drawings.

Fig. 1 is a diagram showing an example of the configuration of a computer system related to a first embodiment;
Fig. 2 is a diagram showing an example of the internal configuration of a storage device;
Fig. 3 is a diagram showing the relationship between the logical VOL respectively comprised by the plurality of storage devices;
Fig. 4 is a diagram showing an example of the configuration of a storage control program;
Fig. 5 is a diagram showing an example of VOL management table;
Fig. 6 is a diagram showing an example of a VOL access control table;
Fig. 7 is a diagram showing an example of the configuration of a storage management program;
Fig. 8 is a diagram showing an example of a VOL integrated management table;
Fig. 9 is a flowchart of the processing when setting encryption settings for a logical VOL;
Fig. 10 is a flowchart of the encryption setting process for a target logical VOL;
Fig. 11 is a flowchart of a process for dealing with a VOL for which encryption settings are not possible;
Fig. 12 is a flowchart of processing for temporarily halting access to a lower-level VOL of the target logical VOL;
Fig. 13 is a flowchart of an encryption setting process for the target logical VOL and a lower-level common logical VOL;
Fig. 14 is a flowchart of a process for deleting a temporary halting of access to a lower-level VOL of the target logical VOL;
Fig. 15 is a flowchart of processing when deleting the encryption setting for a logical VOL;
Fig. 16 is a flowchart of an encryption setting deletion process for the target logical VOL;
Fig. 17 is a flowchart of the encryption setting deletion process for the target logical VOL and a lower-level common logical VOL;
Fig. 18 is a flowchart of processing when the storage device receives a write request from the host computer;
Fig. 19 is a flowchart of processing when the storage device receives a read request from the host computer; and
Fig. 20 is a flowchart of processing when a new virtual VOL is created in any higher-level device.

In a first embodiment, a controller comprises a first determination unit for carrying out a first determination as to whether or not data stored in a target logical volume can be used in a plurality of access devices; a second determination unit for carrying out a second determination as to whether or not the access devices comprise data encryption units respectively when the result of the above-mentioned first determination is affirmative; and a setting controller for controlling the setting related to the above-mentioned target logical volume for one access device of the above-mentioned plurality of access devices based on the result of the above-mentioned second determination.

In a second embodiment according to the first embodiment, the controller further comprises a setting request receiver for receiving an encryption setting request for carrying out, for the above-mentioned one access device, an encryption setting for encrypting data to be stored in the above-mentioned target logical volume. When the above-mentioned setting request receiver receives the above-mentioned encryption setting request and the result of the above-mentioned second determination is that other access device of the above-mentioned plurality of access devices comprises a data encryption unit, the above-mentioned setting controller sends to the above-mentioned one access device and to the above-mentioned other access device an indication to set the above-mentioned encryption setting for the above-mentioned one access device and the above-mentioned other access device.

In a third embodiment according to the second embodiment, the controller further comprises a storage unit for storing information showing an employable encryption method in each access device. The above-mentioned second determination unit determines whether or not the above-mentioned other access device can employ the same encryption method as the encryption method that the above-mentioned one access device employs for data encryption in accordance with the encryption setting set in the above-mentioned one access device, in addition to whether or not the respective access devices comprise data encryption units. When the above-mentioned second determination result is a prescribed result, the above-mentioned setting controller sends to the above-mentioned one access device and to the above-mentioned other access device an indication for setting encryption settings, for the above-mentioned one access device and the above-mentioned other access device, for encrypting data to be stored in the above-mentioned target logical volume in use of the above-mentioned same encryption method. The above-mentioned prescribed result is a determination result signifying that the above-mentioned other access device comprises a data encryption unit, and that, based on the encryption setting set for the above-mentioned one access device, the above-mentioned other access device can use the same encryption method as the encryption method that the above-mentioned one access device uses for data encryption.

In a fourth embodiment according to any of the first through the third embodiments, the controller further comprises a first access controller. When the above-mentioned second determination result determines that the above-mentioned other access device does not comprise a data encryption unit, the above-mentioned first access controller sends to the above-mentioned other access device an indication for processing that makes access to the above-mentioned target logical volume from the above-mentioned other access device impossible.

In a fifth embodiment according to any of the first through the fourth embodiments, the controller further comprises a second access controller. The above-mentioned second access controller sends to the above-mentioned other access device an indication for processing that makes access to the above-mentioned target logical volume from the above-mentioned other access device impossible while the above-mentioned one access device is encrypting data stored in the above-mentioned target logical volume.

In a sixth embodiment according to any of the first through the fifth embodiments, the above-mentioned access device can comprise a logical volume to which the above-mentioned target logical volume is allocated. The above-mentioned access device can set an encryption setting for encrypting the data stored in the above-mentioned target logical volume for each of the above-mentioned virtual volumes. The above-mentioned controller further comprises a setting request receiver for receiving an encryption setting request that requests of the above-mentioned one virtual volume which the above-mentioned one access device comprises that the above-mentioned encryption setting be set. The above-mentioned first determination unit determines whether or not the above-mentioned target logical volume is allocated to the virtual volumes the above-mentioned plurality of access devices respectively comprise. The above-mentioned second determination unit determines whether or not it is possible to set the above-mentioned encryption setting for the virtual volume, which the above-mentioned plurality of access devices respectively comprises, and to which the above-mentioned target logical volume is allocated. When the above-mentioned setting request receiver receives the above-mentioned encryption setting request and the above-mentioned second determination result determines that the above-mentioned encryption setting can be set for the other virtual volume, which the other access device of the above-mentioned plurality of access devices comprises, and to which the above-mentioned target logical volume is allocated, the above-mentioned setting controller sends to the above-mentioned one access device and to the above-mentioned other access device an indication for setting the above-mentioned encryption setting for the above-mentioned one virtual volume and the above-mentioned other virtual volume.

In a seventh embodiment according to any of the first through the fifth embodiments, the above-mentioned access device can comprise a virtual volume to which the above-mentioned target logical volume is allocated. The above-mentioned access device can set an encryption setting for encrypting the data to be stored in the above-mentioned target logical volume for each of the above-mentioned virtual volumes. The above-mentioned controller further comprises a setting request receiver for receiving a virtual volume creation request for creating one virtual volume to which the above-mentioned target logical volume is allocated in the above-mentioned one access device. The above-mentioned first determination unit determines whether or not the above-mentioned target logical volume is allocated to the virtual volumes respectively comprised by the above-mentioned plurality of access devices. The above-mentioned second determination unit determines whether or not the above-mentioned encryption setting can be set for the above-mentioned one virtual volume to be created in the above-mentioned one access device, and the other virtual volume, which the above-mentioned other access device comprises, and to which the above-mentioned target logical volume is allocated. When the above-mentioned setting request receiver receives the above-mentioned virtual volume creation request, and the result of the above-mentioned second determination is that the above-mentioned encryption setting can be set for the above-mentioned one virtual volume and the above-mentioned other virtual volume, the above-mentioned setting controller sends to the above-mentioned one access device an indication for creating the above-mentioned one virtual volume, and an indication for setting the above-mentioned encryption setting for the above-mentioned one virtual volume, and sends to the above-mentioned other access device an indication for setting the above-mentioned encryption setting for the above-mentioned other virtual volume.

At least one of the above-described respective units (the first determination unit, second determination unit, setting controller, setting request receiver, storage unit, first access controller, and second access controller) can be constructed from hardware, a computer program, or a combination thereof (for example, one part can be realized via a computer program, and the remainder can be realized using hardware). The computer program is executed by being read into a prescribed processor. Further, a storage region, which resides in a memory or other such hardware resource, can be used as needed when carrying out information processing by reading the computer program into the processor. Further, the computer program can be installed in the computer from a CD-ROM or other such recording media, or can be downloaded to the computer via a communication network.

One embodiment of the present invention will be explained in detail hereinbelow while referring to the figures. Furthermore, in the explanation of this embodiment, a sentence in which computer program is given as the subject actually describes a situation in which the processing is carried out by the CPU, which executes this computer program.

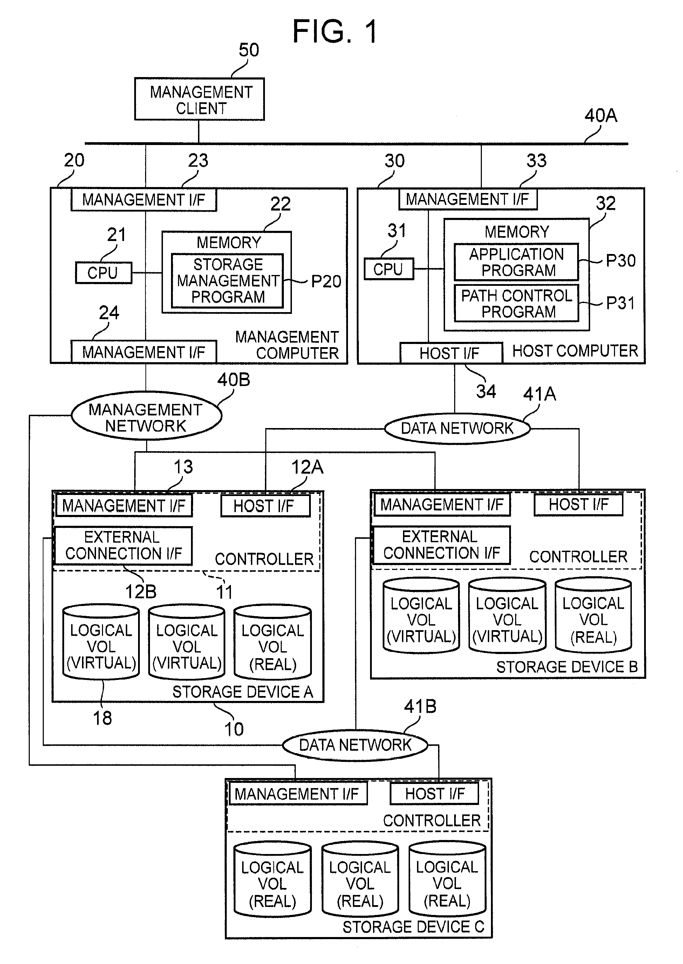

Fig. 1 is a diagram showing an example of the configuration of a computer system related to this embodiment.

A management client 50, management computer 20, and host computer 30 are interconnected via a first management network 40A. Further, the management computer 20 is interconnected to a plurality of storage devices 10 via a second management network 40B. Various types of networks (for example, a LAN (Local Area Network)) can be used as the management networks 40 (the first management network 40A and the second management network 40B). Furthermore, the first management network 40A and the second management network 40B can be the same network.

In this embodiment, three storage devices (storage device A, storage device B, and storage device C) will be considered as the plurality of storage devices 10. A portion of the three storage devices 10 (in this embodiment, storage device A and storage device B) is connected to the host computer 30 via a first data network 41 A. Further, storage device A, storage device B and storage device C are interconnected via a second data network 41 B. That is, storage device C is connected to the host computer 30 by way of either storage device A or storage device B. Various types of networks (for example, a SAN (Storage Area Network)) can be used as the data networks (the first data network 41A and the second data network 41B). Furthermore, the first data network 41A and the second data network 41 B can also be the same network. Further, the management network 40 and the data network 41 can also be the same network.

The host computer 30 is the computer, which accesses the logical volume (VOL) 18 provided by the storage device 10. The host computer 30, for example, comprises a CPU 31; memory 32; host I/F (interface) 34, which is the interface for connecting to the storage device 10; and a management I/F 33, which is the interface for connecting to the management client 50 and the management computer 20. The CPU 31, memory 32, management I/F 33, and host I/F 34, for example, are interconnected via a bus or the like. The CPU 31 is the arithmetic processor for executing the various types of programs stored in the memory 32. The memory 32 is a so-called internal storage device, and comprises both a nonvolatile memory for storing various types of programs, and a volatile memory for temporarily storing processing results. The memory 32, for example, stores a prescribed application program (for example, a database management system (DBMS)) P30, which accesses the logical VOL 18 provided by the storage device 10; and a path management program P31, For example, the application program P30 reads out from the logical VOL 18 various data, which is used when executing this program P30, and writes the execution results of this program P30 to the logical VOL 18. The path management program P31 controls the execution of an I/O request (a write request or a read request) to the storage device 10. Further, the path management program P31 also switches the paths between the host computer 30 and the storage device 10.

The management computer 20 is for managing the host computer 30 and the storage device 10. For example, the management computer 20 can control the respective devices 10, and can create a logical VOL 18 in the storage device 10, create a path from the host computer 30 to the logical VOL 18, and carry out logical VOL 18 migration and replication for the respective devices 10. The management computer 20, for example, comprises a CPU 21; memory 22; front-end management I/F 23, which is the interface for connecting to the management client 50 and the host computer 30; and rear-end management I/F 24, which is the interface for connecting to the storage device 10. The CPU 21, memory 22, and management I/F 23, 24, for example, are interconnected via a bus or the like, the same as the host computer 30. The CPU 31 and memory 23 are substantially the same as those of the host computer 30. The memory 23, for example, stores a storage management program P20. The storage management program P20 will be explained in detail hereinbelow.

The management client 50 is a computer for sending various requests in accordance with indications from the user to the storage management program P20 that runs on the management computer 20. The management client 50, for example, comprises a user I/F, such as a GUI (Graphical User Interface) and a CLI (Command Line Interface), The management client 50 receives an indication from the user via the user I/F, and notifies the user of the results of processing executed in accordance with the received indication.

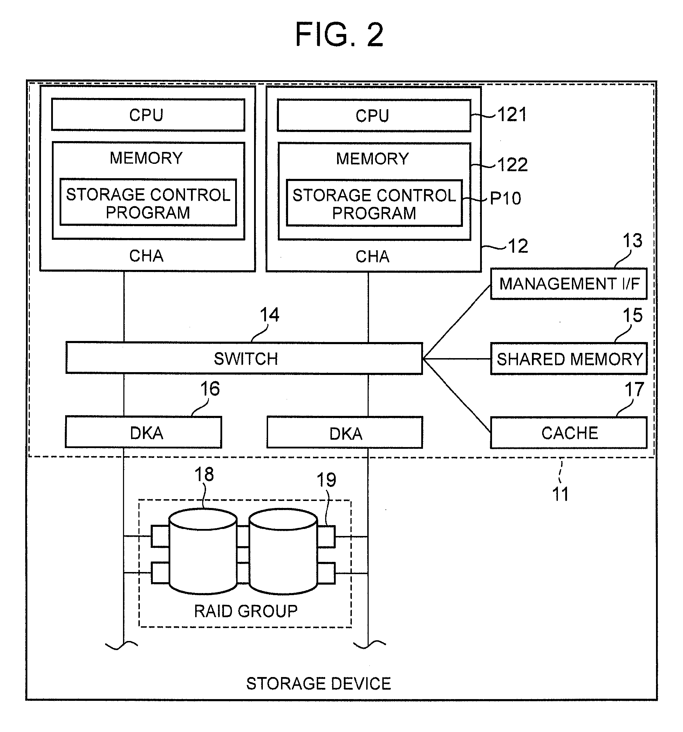

The storage device 10, for example, can be constituted as a RAID (Redundant Array of Independent (or Inexpensive) Disks) system comprising a large number of storage media drives (for example, hard disk drives (HDD)) arranged in an array. The storage media drive is not limited to a HDD, but rather can be configured from other types of storage media drives (for example, a flash memory drive), and a plurality of types of storage media drives can be used coexistently. The internal configuration of the storage device 10 will be explained in detail by referring to Fig. 2.

Fig. 2 is a diagram showing an example of the internal configuration of the storage device 10.

As a controller 11, for example, the storage device 10 comprises a CHA (Channel Adapter) 12; DKA (Disk Adapter) 16; switch 14; shared memory 15; cache memory (hereinafter referred to simply as the "cache") 17; and management I/F 13. The storage device 10 controller 11 controls access to the storage media drive 19, Furthermore, for example, the functions of the storage device 10 controller 11 can be provided in a FC (Fibre Channel) switch configuring a data network 41, and the storage device 10 can be realized by combining the FC switch with a plurality of storage media drives 19.

The CHA 12 is for carrying out data communications with the host computer 30 and other storage devices 10, and comprises either one or a plurality of communication ports. The CHA 12 is equivalent to the host I/F 12A and external connection I/F 12B of Fig.1. The CHA 12 is configured as a microcomputer system (for example, a circuit board) comprising a CPU 121 and memory 122. The memory 122 comprised in the CHA 12, for example, stores a storage control program P10. The storage control program P10 will be explained in detail hereinbelow. When there is a write request from the host computer 30, the CHA 12, for example, respectively writes the write-targeted data to the cache 17, and writes the command received from the host computer 30 to the shared memory 15. Further, when there is a read request from the host computer 30, the CHA 12 writes the command received from the host computer 30 to the shared memory 15, and sends the read-targeted data, which the DKA 16 read out from the storage media drive 19 and wrote to the cache 17, to the host computer 30.

The DKA 16 is for exchanging data with the respective storage media drives 19. The respective DKA 16 can also be configured as a microcomputer system comprising a CPU and memory, the same as the CHA 12. The DKA 16, for example, writes the write-targeted data written to the cache 17 by the CHA 12 to the storage media drive 19, and writes the read-targeted data read out from the storage media drive 19 to the cache 17.

The switch 14, for example, is a crossbar switch, and is the device, which interconnects the CHA 12, DKA 16, shared memory 15, cache 17, and management I/F 13. A bus or other type of connector can be used in place of the switch 14.

The shared memory 15, for example, can be configured from either a nonvolatile or a volatile semiconductor memory. The shared memory 15, for example, stores the various types of commands received from the host computer 30, and the control information used to control the storage device 10. The commands and control information can be redundantly stored by a plurality of shared memories 15.

The cache 17, for example, can be configured from either a volatile or a nonvolatile semiconductor memory. The cache 17 stores the data received from the host computer 30, and the data read out from the storage media drive 19. Furthermore, the shared memory 15 and the cache 17 can be configured as respectively separate memories as in this embodiment, and can also be configured as a single memory. When configured as a single memory, for example, a part of the memory is used as the cache area, and a separate part of the same memory is used as the shared memory area.

Further, in the storage device 10, for example, one or more RAID groups is configured from the plurality of storage media drives 19. The RAID group, for example, provides a redundant storage system based on RAID 1 or RAID 5. A logical VOL 18 is created by allocating one part each of the respective storage areas of the plurality of storage media drives 19 comprised in the RAID group. The logical VOL 18 is provided to the host computer 30 from the storage device 10.

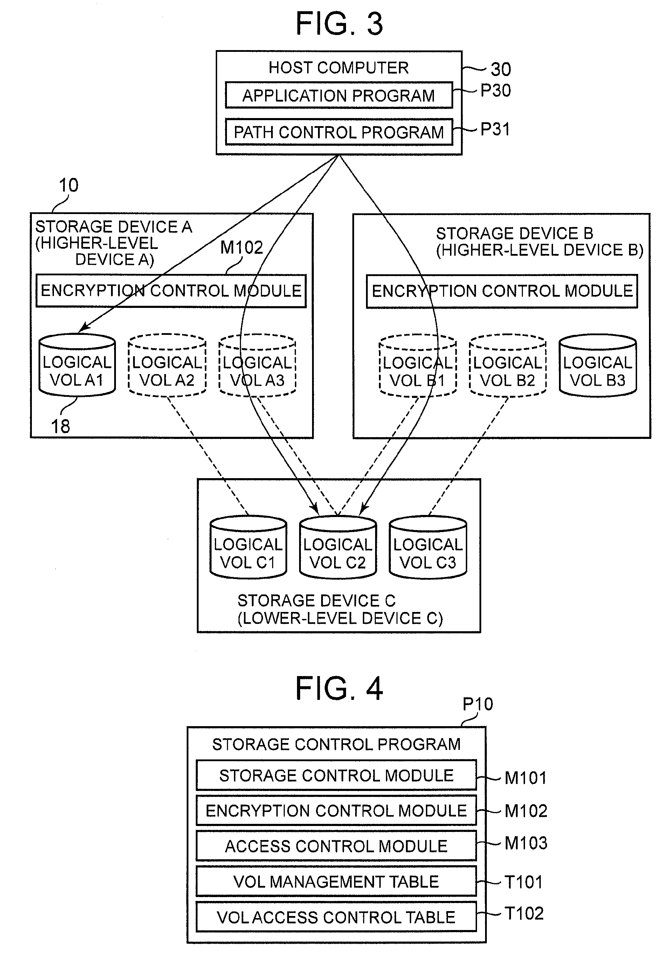

Fig. 3 is a diagram showing the relationship between the logical VOL 18 respectively comprised in the plurality of storage devices 10.

The storage device 10 provides two types of logical VOL 18 to the host computer 30, a real VOL and a virtual VOL. In the explanation of this embodiment, a real VOL is the logical VOL created by the allocation of the storage area in the storage media drive of the storage device 10, which provides this real VOL. Conversely, a virtual VOL is the logical VOL created by the allocation of the storage area of the storage media drive of the other storage device 10 besides the storage device 10 that provides this virtual VOL (that is, the real VOL of the other storage device 10). In the example of this figure, the logical VOL 18 depicted using solid lines are the real VOL, and the logical VOL 18 depicted using broken lines are the virtual VOL. Now then, the dotted lines linking two logical VOL 18 represent the fact that the one logical VOL 18 (real VOL) is allocated to the other logical VOL 18 (virtual VOL). For example, the logical VOL A2 of storage device A is created by the allocation of logical VOL C1 of storage device C. Hereinafter, the allocated-side logical VOL 18 (logical VOL A2 in the above example) will be called the "higher-level VOL". By contrast, the allocating-side logical VOL 18 (logical VOL C1 in the above example) will be called the "lower-level VOL". Furthermore, the storage device 10 comprising the higher-level VOL will be called the "higher-level device", and the storage device 10 comprising the lower-level VOL will be called the "lower-level device".

In this embodiment, at least one of the logical VOL 18 of a certain storage device 10 is created by the allocation of the same logical VOL 18 as the logical VOL 18 allocated to the logical VOL 18 of the other storage device 10. In other words, the logical VOL 18 comprised in the respective different storage devices 10 are created by the allocation of the same logical VOL 18. In the example of this figure, logical VOL C2 of storage device C is allocated to logical VOL A3 of storage device A. Further, logical VOL C2 of storage device C is also allocated to logical VOL B1 of storage device B. That is, the logical VOL 18 (logical VOL A3 and logical VOL B1) of respectively different storage devices 10 (storage device A and storage device B) are created by the allocation of the same logical VOL 18 (logical VOL C2).

Further, in this embodiment, an encryption control module M102, which will be described hereinbelow, may be comprised in the higher-level device. The encryption control module M102 is a module (a subprogram) for carrying out encryption and decryption processing (hereinafter, the "encryption process") of data stored in the logical VOL 18. The higher-level device, which comprises the encryption control module M102, can be set relative to all or a portion of the logical VOL 18 of this higher-level device so as to encrypt the data stored in these logical VOL 18. Hereinafter, the data encryption setting for the logical VOL 18 will be called the "encryption setting". Either data encryption or decryption is carried out when the host computer 30 accesses a logical VOL 18 for which the encryption setting has been set. In explaining the example of this figure, for example, an encryption setting has been set for logical VOL A1, and when the host computer 30 writes data to this logical VOL A1, the write-targeted data is written to the logical VOL A1 subsequent to being encrypted by the encryption control module M102 of storage device A. Further, when the host computer 30 reads out data from logical VOL A1 for which this encryption setting has been set, the read-targeted data is sent to the host computer 30 subsequent to being decrypted by the encryption control module M102 of storage device A.

When the logical VOL 18 for which an encryption setting has been set is a virtual VOL, the encrypted data is stored in the real VOL. For example, when an encryption setting has been set for logical VOL A3, and storage device A receives a write request for logical VOL A3 from the host computer 30, the write-targeted data is stored in logical VOL C2 of storage device C subsequent to being encrypted in storage device A. Because logical VOL C2 also constitutes the lower-level VOL of logical VOL B1 of storage device B, there is also the likelihood of the data of logical VOL C2 being accessed from storage device B as well.

Next, the storage management program P20 comprised in the management computer 20, the storage control program P10 comprised in the storage device 10, and the various types of tables of the storage management program P20 and the storage control program P10 will be explained in detail by referring to Figs. 4 through 8. Furthermore, in the tables of the respective figures, the assigned reference numeral denotes the column or field, and does not denote the value itself, which is stored in the column or field. Therefore, in the following explanation, when denoting a column or a field, a reference numeral will be used in the explanation, and when not denoting a column or a field, the explanation will be given without using a reference numeral.

Fig. 4 is a diagram showing an example of the configuration of the storage control program P10.

The storage control program P10, for example, comprises various subprograms, such as a storage control module M101, the encryption control module M102, and an access control module M103; and various types of tables, such as a VOL management table T101, and a VOL access control table T102.

The encryption control module M102 is the module for carrying out encryption processing for the logical VOL 18 (processing for encrypting and decrypting data stored in the logical VOL 18). For example, the encryption control module M102, as described hereinabove, encrypts data written to the logical VOL 18, and decrypts data read out from the logical VOL 18. Further, the encryption control module M102 sets an encryption setting for a logical VOL 18, and deletes an encryption setting that has been set for a logical VOL 18. When setting an encryption setting, the encryption control module M102 creates the encryption key used to encrypt (decrypt) the data of this logical VOL 18.

The access control module M103 is the module for controlling access to the logical VOL 18.

The access control module M103 controls the storage device 10 such that the logical VOL 18 is accessed only from a device (the host computer 30 or higher-level device), which has permission to access this logical VOL 18. The VOL access control table T102 is used in this access control. The access control module M103 also carries out updating of the VOL access control table T102.

The storage control module M101 carries out all the processing for controlling the storage device 10 with the exception of the processing carried out by the encryption control module M102 and access control module M103.

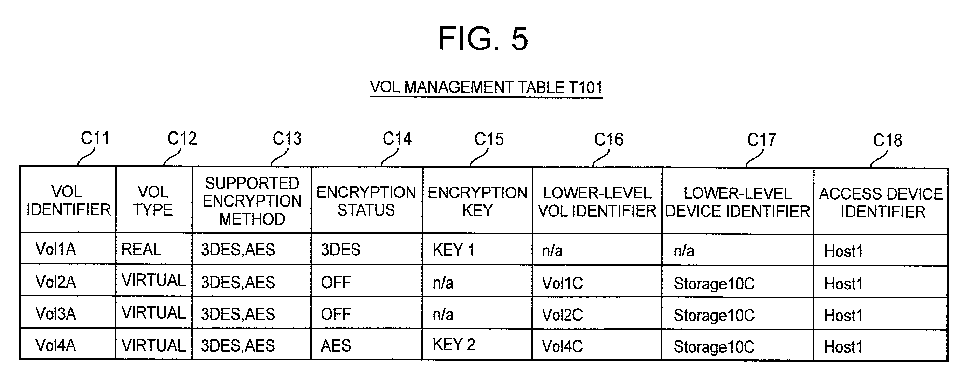

Fig. 5 is a diagram showing an example of the VOL management table T101.

The VOL management table T101 is for managing information related to the logical VOL 18 provided by the storage device 10. The VOL management table T101, for example, comprises columns for a VOL identifier C11; VOL type C12; supported encryption method C13; encryption status C14; encryption key C15; lower-level VOL identifier C16; lower-level device identifier C17; and access device identifier C18.

VOL identifier C11 is the column for storing the value for uniquely specifying a logical VOL 18 (hereinafter, the "VOL identifier"). VOL type C12 is the column for storing the value showing the VOL type of the relevant logical VOL 18. For example, if the VOL type of the relevant logical VOL 18 is a real VOL, "real" is set in VOL type C12, and if the VOL type of the relevant logical VOL 18 is a virtual VOL, "virtual" is set in VOL type C12. The supported encryption method C13 is the column for storing a value (for example, the encryption method name) showing the encryption method (hereinafter, the "usable encryption method"), which can be used in the encryption processing of the relevant logical VOL 18 when an encryption setting has been set for this logical VOL 18. When a plurality of usable encryption methods exist, for example, a plurality of encryption method names are set delimited by commas as in this figure. When the storage device 10 comprising the relevant logical VOL 18 does not comprise an encryption control module M102, and an encryption setting cannot be set for this logical VOL 18, for example, "n/a" is set in supported encryption method C13. Encryption status C14 is the column which stores the value showing the encryption method currently being used in the relevant logical VOL 18. When this logical VOL 18 is a logical VOL 18 for which an encryption setting is possible, but an encryption setting has not been set, "OFF" is set in encryption status C14, and when this logical VOL 18 is a logical VOL 18 for which an encryption setting is not possible, "n/a" is set in encryption status C14. Encryption key C15 is the column for storing the encryption key (arbitrary string of code) utilized in the encryption process. When an encryption setting has not been set for this logical VOL 18, "n/a" is set in encryption key C15. Lower-level VOL identifier C16 is the column for storing the VOL identifier showing the lower-level VOL of the relevant logical VOL 18. Lower-level device identifier C17 is the column for storing the identifier of the storage device 10 comprising the lower-level VOL of the relevant logical VOL 18. Access device identifier C18 is the column for storing the identifier of the device (hereinafter, the "access device"), which utilizes the logical VOL 18 (accesses the relevant logical VOL 18). When the higher-level device and the lower-level device exist as in this embodiment, the identifier of the higher-level device is set in access device identifier C18 if the relevant logical VOL 18 is provided in the lower-level device, and the identifier of the host computer 30 is set in access device identifier C18 if the logical VOL 18 is provided in the higher-level device.

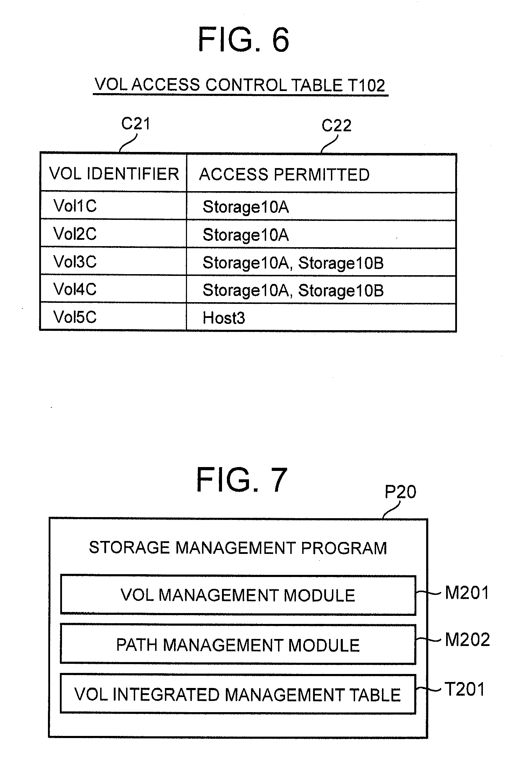

Fig. 6 is a diagram showing an example of the VOL access control table T102.

The VOL access control table T102 is the table for managing a device capable of accessing the logical VOL 18 provided by the storage device 10. The VOL access control table T102, for example, comprises columns for a VOL identifier C21; and access permitted C22.

VOL identifier C21 is the column for storing the VOL identifier showing the relevant logical VOL 18. Access permitted C22 is the column for storing the identifier of the device (storage device 10 and host computer 30) that is permitted to access this logical VOL 18. When there is a plurality of access-permitted devices, the identifiers of the respective devices are set delimited by commas. For example, in the example of Fig. 6, access to the logical VOL 18 having the VOL identifier "Vol 1C" is only possible from the device having identifier "Storage 10A".

Fig. 7 is a diagram showing an example of the configuration of the storage management program P20.

The storage management program P20 comprises various types of subprograms, such as a VOL management module M201, and path management module M202; and various type of tables, such as VOL integrated management table T201.

The VOL management module M201 is the module for executing various operations for the logical VOL 18 of the storage device 10 in accordance with a request from the management client 50. The VOL management module M201, upon receiving a request from the management client 50, issues an indication to the storage control program P10 of the storage device 10 so that various operations are carried out for executing the request from the management client 50. For example, the VOL management module M201, upon receiving either an encryption setting request or an encryption setting delete request for the logical VOL 18 from the management client 50, issues an indication to the encryption control module M102 of the storage device 10 comprising the specified logical VOL 18 so that either an encryption setting or an encryption setting delete is carried out for this logical VOL 18. The VOL management module M201 also carries out the updating of the VOL integrated management table T201.

The path management module M202 is the module for causing a path control program P31 that runs on the host computer 30 to control the switching of the path from the host computer 30 to the logical VOL 18 provided by the storage device 10, and the I/O to the logical VOL 18. For example, when setting an encryption setting or when carrying out an encryption setting delete for the logical VOL 18, the path management module M202 sends to the path control program P31 an indication for suspending the issuing of an I/O request to this logical VOL 18 to prevent this logical VOL 18 from being accessed by the host computer 30.

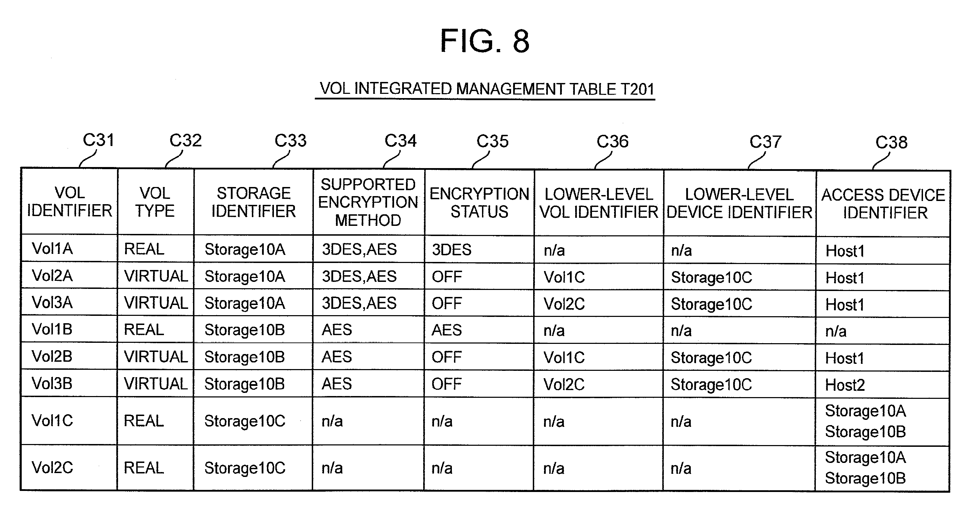

Fig. 8 is a diagram showing an example of the VOL integrated management table T201.

The VOL integrated management table T201 is for integratively managing information related to the logical VOL 18 provided by a plurality of storage devices 10 managed by the management computer 20. The VOL integrated management table T201 is substantially the same as the VOL management table T101, with the exception of the following point. That is, the VOL integrated management table T201 comprises a storage device identifier C33 column. The storage device identifier C33 is the column for storing the identifier of the storage device 10 comprising this logical VOL 18. Providing this column C33 makes it clear that which storage device the logical VOL 18 is included in of the plurality of storage devices 10. Further, a column equivalent to encryption key C15 in the VOL management table T101 is not provided in the VOL integrated management table T201. This is because, in this embodiment, the encryption key is ordinarily only used when implementing the encryption process on the management computer 20 side, and therefore the intention is that the encryption key is managed solely by the storage device 10, and the management computer 20 fetches the encryption key from the storage device 10 as needed. Furthermore, a column equivalent to encryption key C15 in the VOL management table T101 may also be provided in the VOL integrated management table T201.

The preceding has been an explanation of the configuration of a computer system related to this embodiment. The flows of the various processes carried out by the management client 50, management computer 20, host computer 30, and storage device 10 will be explained below. Furthermore, the following flowcharts present overviews of the respective processes to the extent necessary to understand and implement the present invention. Therefore, a so-called person having ordinary skill in the art will be able to change the order of the steps, and/or change one step for another step with departing from the scope of the present invention.

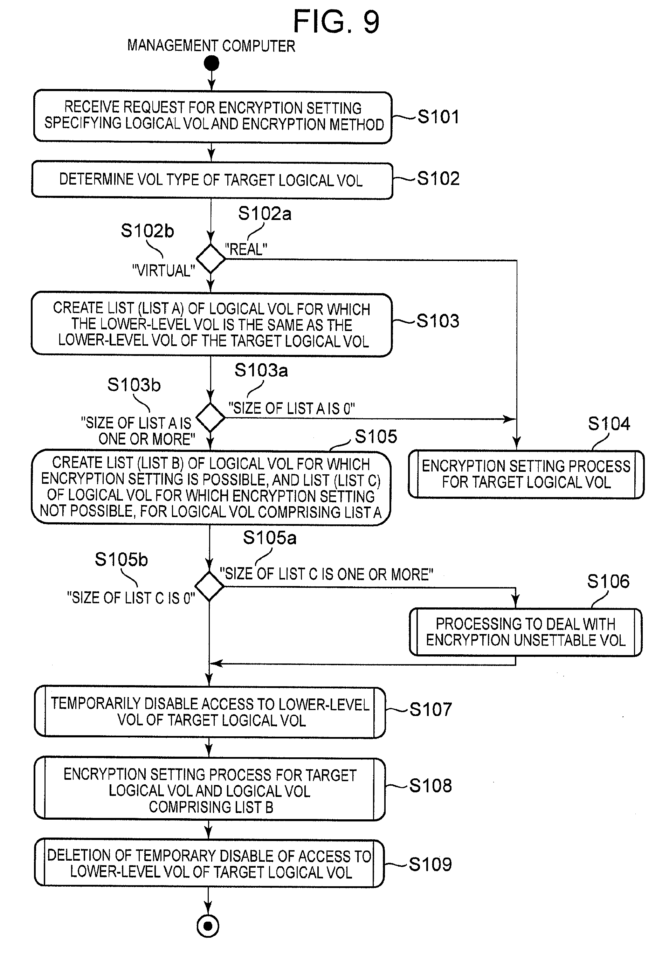

Fig. 9 is a flowchart of the processing when an encryption setting is set for the logical VOL 18.

The processing of Fig. 9 commences in accordance with the user issuing an encryption setting indication to the management client 50. This encryption setting indication specifies as parameters thereof the VOL identifier of the logical VOL 18, which constitutes the target of the encryption setting, and a value showing the encryption method (hereinafter, the "specified encryption method") to be employed in the encryption process for this logical VOL 18. The management client 50, which receives the encryption setting indication, sends an encryption setting request together with the specified parameters to the management computer 20. Hereinafter, the logical VOL 18 constituting the target of the encryption setting will be called the "target logical VOL" in Figs. 9 through 14.

When the management computer 20 receives the encryption setting request (S101), the VOL management module M201 references the VOL integrated management table T201 and determines the VOL type of the logical VOL 18 (target logical VOL) identified by the VOL identifier notified from the management client 50 (S102).

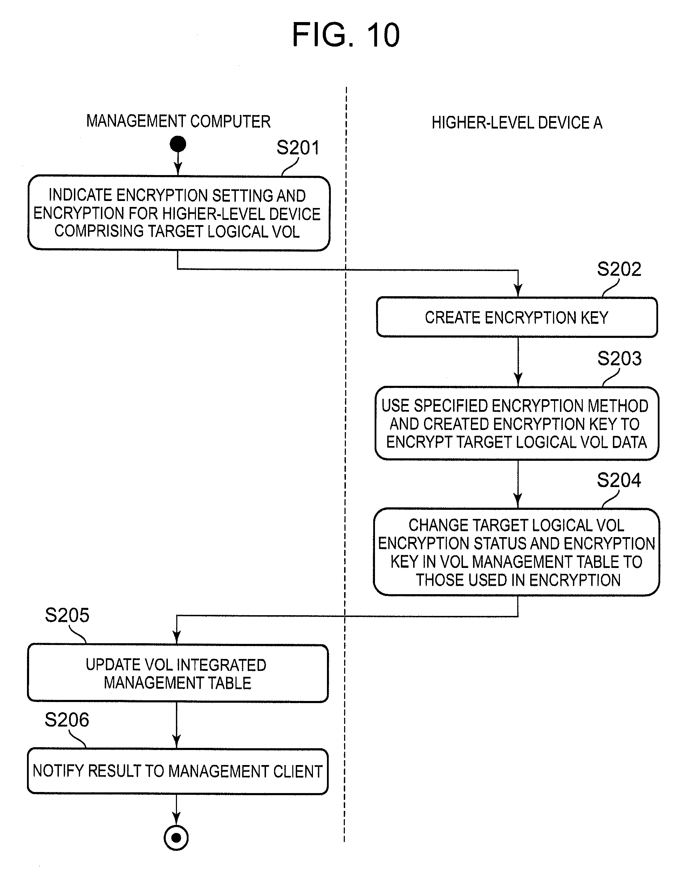

When the VOL type of the target logical VOL is a real VOL (S102a), the VOL management module M201 executes the processing of S104. That is, the process for making the encryption setting in the target logical VOL (hereinafter, the "encryption setting process") is carried out without taking into account logical VOL 18 other than the target logical VOL. The details of this process will be explained below using Fig. 10.

Conversely, when the VOL type of the target logical VOL is a virtual VOL (S102b), the VOL management module M201 references the VOL integrated management table T201 and creates a list of VOL identifiers of the logical VOL 18, for which the lower-level VOL is the same as the lower-level VOL of the target logical VOL (this list will be labeled "list A") (S103). Furthermore, list A does not comprise the identifier of the target logical VOL.

Thereafter, the VOL management module M201 determines the size of list A (the number of logical VOL identifiers comprising list A).

When the size of list A is 0 (that is, when list A comprises no logical VOL 18 identifiers at all) (S103a), the VOL management module M201 executes the processing of S104. That is, the encryption setting process is carried out for the target logical VOL without taking into account logical VOL 18 other than the target logical VOL. This is because the lower-level VOL of the target logical VOL does not have an higher-level VOL other than the target logical VOL, and therefore, will not affect the other logical VOL 18 even if an encryption setting is set in the target logical VOL.

Conversely, when the size of list A is one or more (S103b), the VOL management module M201 determines whether or not the specified encryption method is an encryption method capable of being used in the relevant logical VOL 18 (in other words, whether or not it is a logical VOL 18 for which an encryption setting can be set such that the specified encryption method is used at the time of the encryption process) for the respective logical VOL 18 identified by the VOL identifiers comprising list A. Then, the VOL management module M201 creates a list (list B) of VOL identifiers of logical VOL 18 (logical VOL 18 capable of an encryption setting that uses the specified encryption method), in which the specified encryption method is the usable encryption method, and a list (list C) of VOL identifiers of logical VOL 18 for which the specified encryption method is not the usable encryption method (logical VOL 18 incapable of an encryption setting that uses the specified encryption method, hereinafter the "encryption unsettable VOL") (S105). Furthermore, the list A elements (VOL identifiers) are a collection of list B elements and list C elements. The determination as to whether or not the specified encryption method can be used is carried out by checking if the value indicating the specified encryption method is entered in supported encryption method C34 of the VOL integrated management table T201. When the value indicating the specified encryption method is entered in supported encryption method C34, it is determined that the encryption setting, which uses the specified encryption method, is possible, and, by contrast, when this value is not entered in supported encryption method C34, it is determined that the encryption setting is not possible.

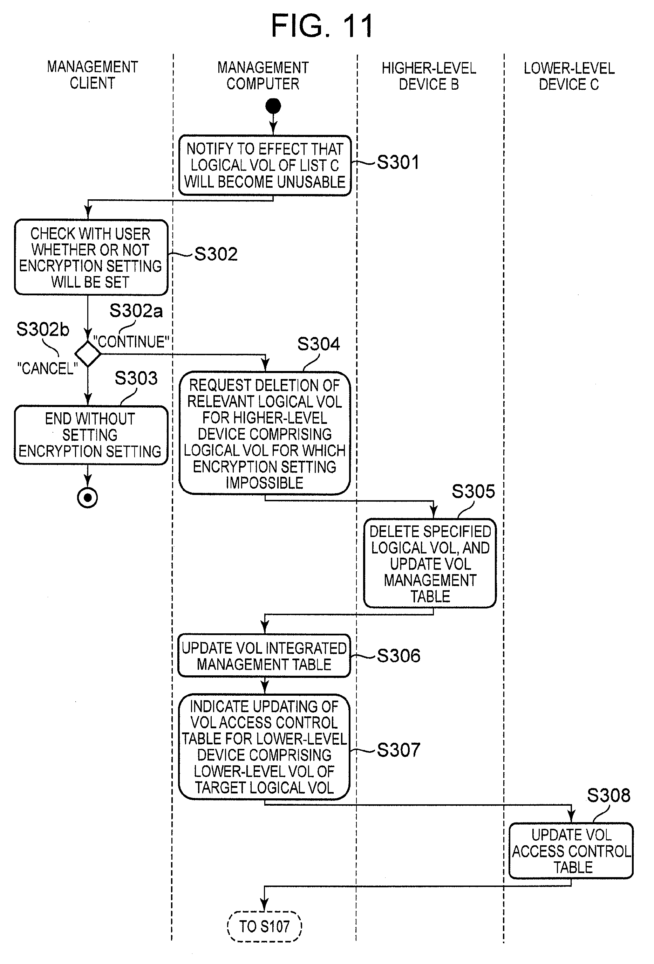

When an encryption unsettable VOL exists (that is, when the size of list C is one or more) (S105a), the VOL management module M201 carries out processing to deal with this encryption unsettable logical VOL (S106). That is, the VOL management module M201 attempts to delete the encryption unsettable VOL (the logical VOL 18 identified by the VOL identifiers comprising list C) (deleting the allocation of the lower-level VOL (the lower-level VOL in common with the target logical VOL) of this encryption unsettable VOL). This is because there is the danger of the encrypted data being destroyed when a data write is generated to the lower-level VOL of the target logical VOL by way of the encryption unsettable VOL as a result of the encryption setting being set in the target logical VOL 18. The details of this process will be explained below using Fig. 11. Subsequent to the end of the processing designed to deal with the encryption unsettable VOL, the storage management program P20 carries out the processing of S107.

Conversely, when there is no logical VOL 18, whichis incapable of an encryption setting that uses the specified encryption method (that is, when the size of list C is 0)(S105b), the storage control program P20 carries out the processing of S107.

By the time of S107, the logical VOL 18 identified by the VOL identifier comprising list C has been deleted. Therefore, at this point in time, the logical VOL 18, for which the lower-level VOL is the same as the lower-level VOL of the target logical VOL, constitutes the logical VOL 18 identified by the VOL identifier comprising list B. Hereinafter, the logical VOL 18 identified by the VOL identifier comprising list B will be referred to as the "lower-level common logical VOL".

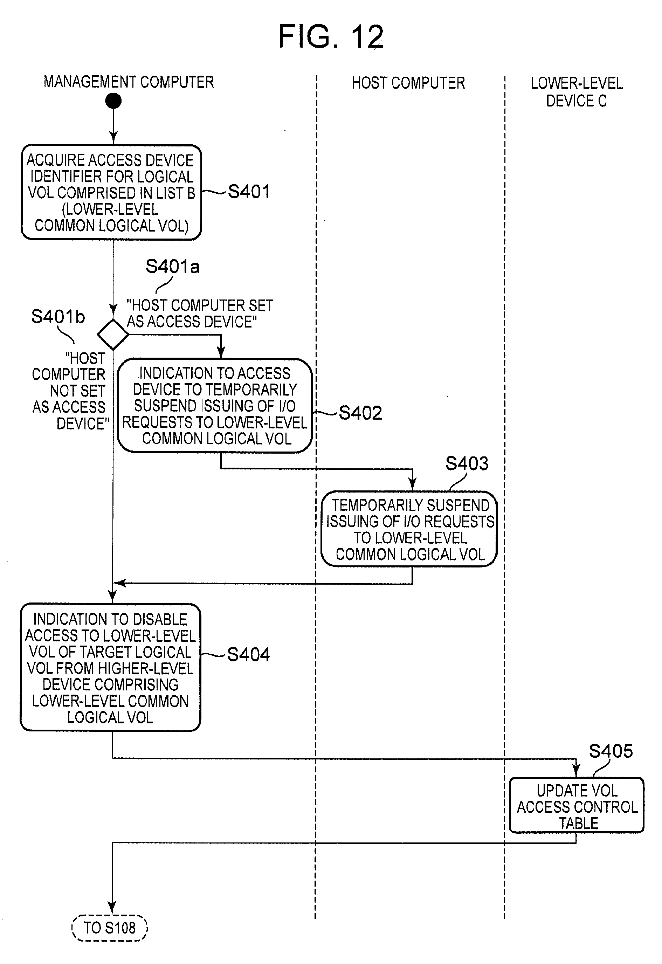

In S107, the path management module M202 temporarily disables access to the lower-level VOL of the target logical VOL so that the lower-level VOL of the target logical VOL is not accessed by way of a logical VOL 18 other than the target logical VOL (that is, a lower-level common logical VOL) (S107). This is to prevent the lower-level VOL of the target logical VOL from being accessed while an encryption setting process is being carried out for the target logical VOL. This process will be explained in detail hereinbelow using Fig. 12.

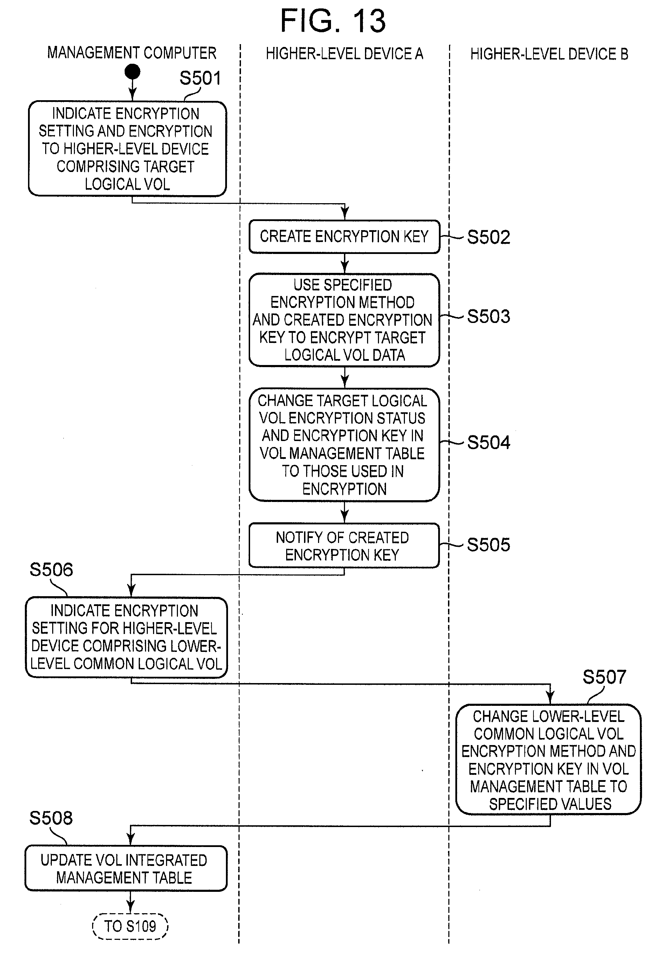

Thereafter, the VOL management module M201 carries out the encryption setting process for the target logical VOL and the lower-level common logical VOL (the logical VOL 18 identified by the VOL identifiers comprising list B) (S108). This process will be explained in detail hereinbelow using Fig. 13.

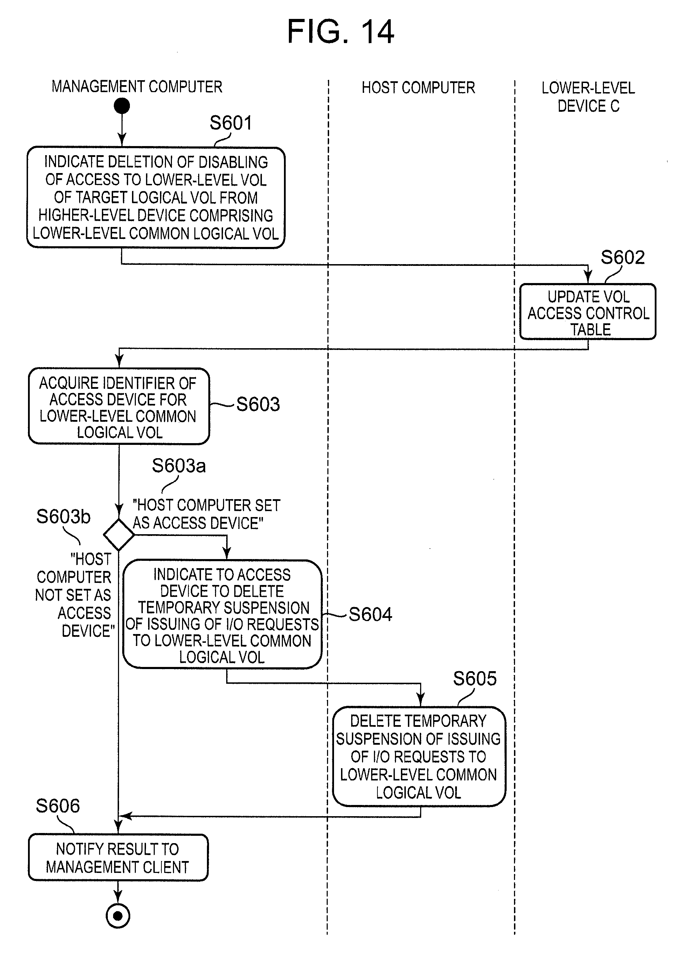

Thereafter, the VOL management module M201 deletes the temporary disable of access to the lower-level VOL of the target logical VOL commenced in S107 (S109). This process will be explained in detail hereinbelow using Fig. 14.

Fig. 10 is a flowchart of the encryption setting process for the target logical VOL.

First, the VOL management module M201 of the management computer 20 specifies the storage device 10 (higher-level device) comprising the target logical VOL by referring to the VOL integrated management table T201, and requests an encryption setting and data encryption for this higher-level device (S201). A VOL identifier of the target logical VOL, which is the target of this encryption setting, and a value indicating the encryption method to be used in the encryption process (specified encryption method) are notified to the higher-level device together with this request. Furthermore, for this embodiment, the explanation supposes that the target logical VOL is comprised in higher-level device A, the lower-level common logical VOL is comprised in higher-level device B, and the lower-level VOL of the target logical VOL is comprised in lower-level device C.

The encryption control module M102 of higher-level device A, which receives the requests for an encryption setting and data encryption, creates an encryption key corresponding to the specified encryption method (S202).

Next, the encryption control module M102 uses the specified encryption method and created encryption key to encrypt the data stored in the target logical VOL (S203).

Thereafter, the encryption control module M102 respectively sets the value indicating the used encryption method (specified encryption method) in encryption status C14 of the target logical VOL, and the created encryption key in encryption key C15 of the VOL management table T101 of higher-level device A (S204).

When the higher-level device A encryption setting and data encryption are complete, the VOL management module M201 of the management computer 20 sets a value indicating the used encryption method (specified encryption method) in encryption status C35 of the target logical VOL in the VOL integrated management table T201 (S205).

Thereafter, the VOL management module M201 notifies the management client 50 as to whether or not the encryption setting for the target logical VOL was set normally (S206). When a failure occurs at any point in time during the processing of Fig. 9, the VOL management module M201 notifies the management client 50 of an error.

Fig. 11 is a flowchart of the process for dealing with an encryption unsettable VOL.

First, the VOL management module M201 of the management computer 20 notifies the management client 50 to the effect that the encryption unsettable VOL (logical VOL 18 identified by the VOL identifier comprising list C) could not be used when setting an encryption setting for the target logical VOL (S301).

The management client 50, which receives the notification to the effect that the logical VOL 18 identified by the VOL identifier comprising list C could not be used, checks with the user as to whether or not to set the encryption setting (S302).

When the user indicates to the management client 50 not to set the encryption setting (when the encryption setting indication is cancelled) (S302b), processing ends as-is without setting the encryption setting (S303).

Conversely, when the user issues an indication to the management client 50 to set the encryption setting (S302a), continue-process is notified to the storage management program P20 of the management computer 20.

Upon receiving the continue-process notification, the VOL management module M201 specifies the storage device 10 (higher-level device) comprising the encryption unsettable VOL by referencing the VOL integrated management table T201, and requests this higher-level device 10 to delete this encryption unsettable VOL (to delete the allocation of the lower-level VOL (the lower-level VOL common to the target logical VOL) to this encryption unsettable VOL) (S304). The explanation supposes that the encryption unsettable VOL here is comprised in higher-level device B the same as the lower-level common logical VOL.

The storage control module M101 of higher-level device B, which receives the request to delete the encryption unsettable VOL, deletes the encryption unsettable VOL, and deletes the information related to this deleted encryption unsettable VOL from the VOL management table T101 (S305).

When the deletion of the encryption unsettable VOL has ended, the VOL management module M201 of the management computer 20 deletes the information related to the deleted encryption unsettable VOL from the VOL integrated management table T201 (S306).

Next, the VOL management module M201 references the VOL integrated management table T201, and specifies the storage device 10 (in this example, lower-level device C) to which the lower-level VOL of the target logical VOL belongs. Then, the VOL management module M201 sends a request to this lower-level device C to update the access control table T102 to contents that make it impossible to access the lower-level VOL of the target logical VOL from higher-level device B, which comprises the deleted encryption unsettable VOL (S307). More specifically, the VOL management module M201 sends a request to delete the identifier of higher-level device B, which is mapped to the lower-level VOL of the target logical VOL, from access permitted C22 of the lower-level VOL of the target logical VOL.

Lower-level device C, which receives the access control table T102 update request (request issued in S307), deletes the identifier identifying the higher-level device (in this example, higher-level device B), which comprises the deleted encryption unsettable VOL from access permitted C22 of the lower-level VOL of the target logical VOL in the access control table T102 (S308).

When there is a plurality of encryption unsettable VOL, the processing of S304 through S308 is executed repeatedly for all of these VOL.

Thereafter, the storage management program P20 executes the processing of S107.

Fig. 12 is a flowchart of the process for temporarily disabling access to the lower-level VOL of the target logical VOL.

This process is implemented to prevent the lower-level VOL of the target logical VOL from being accessed by way of the lower-level common logical VOL while an encryption setting process is being carried out for the target logical VOL. Further, this process is also carried out to control the host computer 30 (control of the suspension of the issuing of I/O requests) so that the issuing of I/O requests from the host computer 30, which uses the access-disabled channel, are temporarily suspended. This is because, if an I/O request is issued from the host computer 30 in a state in which access from the lower-level common logical VOL to the lower-level VOL is disabled, there is the likelihood of an error being notified to the host computer 30, and unnecessary error processing being carried out by the host computer 30. Furthermore, the control of the suspension of the issuing of I/O requests (the processing of S401 through S403) does not necessarily have to be carried out.

First, the path management module M202 of the management computer 20 references the VOL integrated management table T201 and acquires the identifier of the access device for the lower-level common logical VOL (the logical VOL 18 identified by the VOL identifier comprising list B) (S401).

When the host computer 30 is not set as the access device for the lower-level common logical VOL (S401b), the path management module M202 carries out the processing of S404.

Conversely, when the host computer 30 is set as the access device for the lower-level common logical VOL (S401 a), the path management module M202 issues an indication to the path control program P31 of this access device (the host computer 30) to suspend the issuing of I/O requests to the lower-level common logical VOL (S402).

The path control program P31 of the host computer 30, which receives the indication to suspend the issuing of I/O requests (the indication issued in S402), switches operations such that, when an I/O requests is generated to the lower-level common logical VOL, the issuing of this request is temporarily suspended in accordance with the indication from the path management module M202 (S403).

When there is a plurality of lower-level common logical VOL (when the size of list B is one or more), the processing of S401 through S403 is executed repeatedly for all the lower-level common logical VOL.

Thereafter, the path management module M202 references the VOL integrated management table T201, and specifies the storage device (in this example, lower-level device C), which comprises the lower-level VOL of the target logical VOL. Then, the path management module M202 issues an indication to this lower-level device C to temporarily disable access to the lower-level VOL of the target logical VOL by way of logical VOL 18 other than the target logical VOL (that is, the lower-level common logical VOL) (S404).

The access control module M103 of lower-level device C, which receives the access disable indication (the indication issued in S404), deletes the identifier of the storage device (the higher-level device comprising the lower-level common logical VOL, which in this example, is higher-level device B) other than the higher-level storage device (in this example, higher-level device A), which comprises the target logical VOL, from access permitted C22 of the lower-level VOL of the target logical VOL in the VOL access control table T101 (S405).

Thereafter, the storage management program P20 executes the processing of S108.

Furthermore, in the processing of Fig. 12, the issuing of I/O requests is temporarily suspended on the side of the path control program P30 of the host computer 30, but the processing for an I/O request from the host computer 30 can also be suspended on the storage device 10 side (the side of the higher-level device, which receives the I/O request from the host device 30). In this case, the VOL management module M201 issues an indication to the storage control module M101 of the corresponding higher-level device (in this example, higher-level device B) to suspend processing of I/O requests from the host computer 30.

Fig. 13 is a flowchart of the encryption setting processes for the target logical VOL and lower-level common logical VOL.

First, the VOL management module M201 of the management computer 20 references the VOL integrated management table T201, specifies the storage device 10, which comprises the target logical VOL (in this example, higher-level device A), and issues a request to this higher-level device A for an encryption setting and data encryption, and the acquisition of the encryption key used in encryption (S501). The VOL identifier of the target logical VOL, which is the target of the encryption setting, and a value indicating the encryption method (specified encryption method) to be used in encryption processing are notified to higher-level device A together with this request the same as in S201 of Fig. 10.

The encryption control module M102 of higher-level device A, which receives the request for an encryption setting and data encryption (the request issued in 8501), creates an encryption key corresponding to the specified encryption method (S502).

Next, the encryption control module M102 uses the specified encryption method and the created encryption key to encrypt the data stored in the target logical VOL (S503).

Thereafter, the encryption control module M102 respectively sets the value indicating the used encryption method (specified encryption method) in encryption status C14 of the target logical VOL, and the created encryption key in encryption key C15 in the VOL management table T101 of higher-level device A (S504).

Thereafter, the encryption control module M102 notifies the VOL management module M201 of the management computer 20 of the encryption key, which was used in the encryption process (S505).

Next, the VOL management module M201 of the management computer 20 issues a request to the higher-level device, which comprises the lower-level common logical VOL (in this example, higher-level device B), for an encryption setting for the lower-level common logical VOL (S506). The VOL identifier of the target logical VOL, which is the target of the encryption setting, the value indicating the encryption method to be used in the encryption process (specified encryption method), and the encryption key to be used in the encryption process (the encryption key notified from higher-level device A in S505) are notified to higher-level device B together with this request.

The encryption control module M102 of higher-level device B, which receives the encryption setting request (the request issued in S506), respectively sets the value indicating the encryption method notified from the management computer 20 (specified encryption method) in encryption status C14 of the lower-level common logical VOL, and the encryption key notified from the management computer 20 in encryption key C15 in the VOL management table T101 of higher-level device B (S507). Consequently, this completes preparations for reading/writing from/to the lower-level VOL, for which the encryption setting was set by higher-level device A, in the higher-level device B side.

When the higher-level device A encryption setting and data encryption, and the higher-level device B encryption setting are complete, the VOL management module M201 of the management computer 20 sets the value indicating the used encryption method (specified encryption method) in encryption status C35 of the target logical VOL and the lower-level common logical VOL in the VOL integrated management table T201 (S508).

When there is a plurality of lower-level common logical VOL (when the size of list B is one or more), the processing of S506 through S508 is executed repeatedly for all the lower-level common logical VOL.

Thereafter, the storage management program P20 executes the processing of S109.

Fig. 14 is a flowchart of the process for deleting the temporary disable of access to the lower-level VOL of the target logical VOL.

First, the path management module M202 of the management computer 20 references the VOL integrated management table T201, and specifies the storage device 10, which comprises the lower-level VOL of the target logical VOL (in this example, lower-level device C). Then, the path management module M202 issues an indication to this lower-level device C to delete the temporary disable of access to the lower-level VOL of the target logical VOL by way of the logical VOL 18 other than the target logical VOL (that is, the lower-level common logical VOL) (S601). A list of identifiers of storage devices 10 comprising the lower-level common logical VOL (that is, list B) is notified to lower-level device C together with this indication.

The access control module M103 of lower-level device C, which receives the access disable deletion indication (the indication issued in S601), adds the identifier of the storage device 10 comprised in the notified list B to access permitted C22 of the lower-level VOL of the target logical VOL in the VOL access control table T101 (S602).

Next, the path management module M202 references the VOL integrated management table T201, and acquires the identifier of the access device for the lower-level common logical VOL (the logical VOL 18 identified by the VOL identifier comprised in list B) (S603).

When the host computer 30 is not set as the access device for the lower-level common logical VOL (S603b), the path management module M202 carries out the processing of S606.

Conversely, when the host computer 30 is set as the access device for the lower-level common logical VOL (S603a), the path management module M202 issues an indication to the path control program P31 of this access device (the host computer 30) to delete the suspension of the issuing of I/O requests to the lower-level common logical VOL (S604).

The path control program P31 of the host computer 30, which receives the indication to delete the suspension of the issuing of I/O requests (the indication issued in S604), switches operations so as to delete the suspension of the issuing of I/O requests to the lower-level common logical VOL in accordance with the indication from the path management module M202 (S605).

When there is a plurality of lower-level common logical VOL (when the size of list B is one or more), the processing of S603 through S605 is executed repeatedly for all the lower-level common logical VOL. Furthermore, when the processing of S401 through S403 of Fig. 12 has not been carried out, the processing of S603 through S605 of Fig. 14 can also not be carried out.

Thereafter, the VOL management module M201 notifies the management client 50 as to whether or not the encryption setting for the target logical VOL was set normally (S606). When a failure occurs at any point in time during the processing of Fig. 9, the VOL management module M201 notifies the management client 50 of an error.

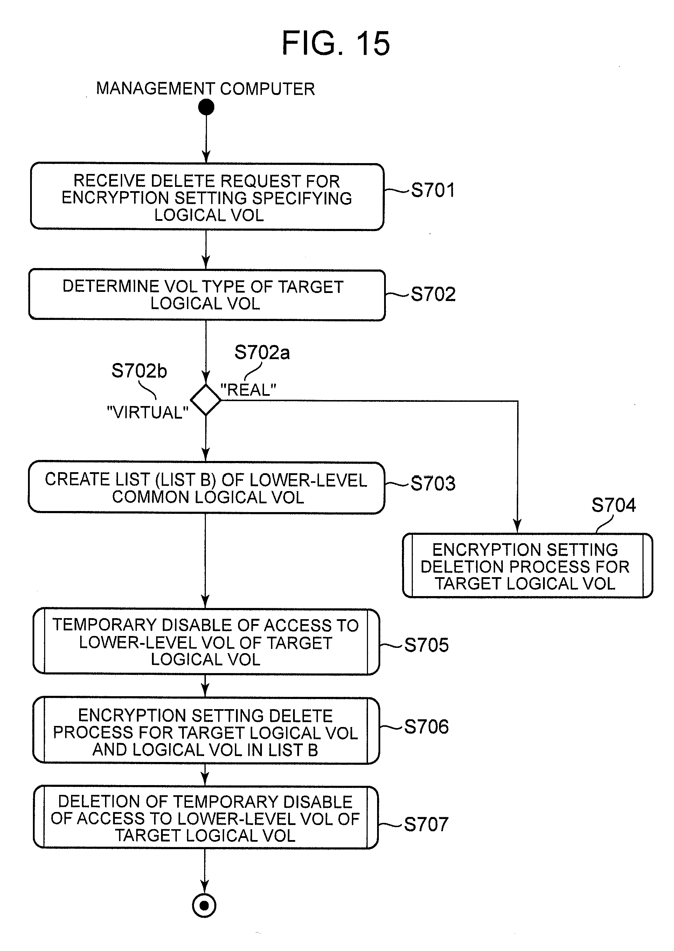

Fig. 15 is a flowchart of the process when carrying out the deletion of the encryption setting for the logical VOL 18.

The encryption setting deletion process of Fig. 15 commences in accordance with the user issuing an encryption setting deletion indication to the management client 50. This encryption setting deletion indication specifies as parameters thereof a VOL identifier of the logical VOL 18, which constitutes the target of the deletion of the encryption setting, and the value indicating the encryption method (hereinafter, the "specified encryption method") used in the encryption process for this logical VOL 18. The management client 50, which receives the encryption setting deletion indication, sends an encryption setting deletion request together with the specified parameters to the management computer 20. Hereinafter, the logical VOL 18 constituting the target of the encryption setting deletion will be called the "target logical VOL" in Figs. 15 through 17.

When the management computer 20 receives the encryption setting deletion request (S701), the VOL management module M201 references the VOL integrated management table T201, and determines the VOL type of the logical VOL 18 (target logical VOL) identified by the VOL identifier notified from the management client 50 (S702).

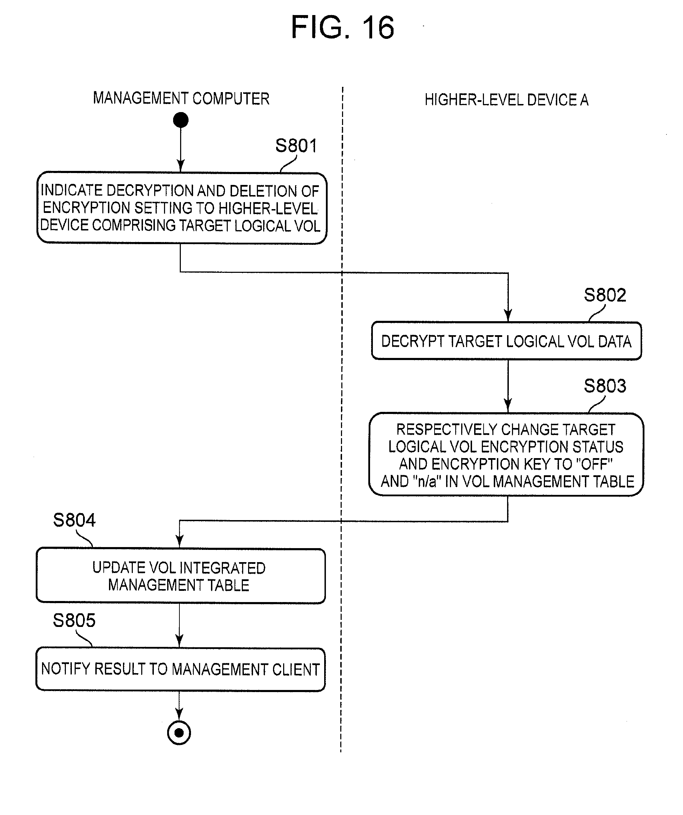

When the VOL type of the target logical VOL is a real VOL (S702a), the VOL management module M201 executes the processing of S704. That is, the process for deleting the encryption setting for the target logical VOL (hereinafter, the "encryption setting deletion process") is carried out without taking into account logical VOL 18 other than the target logical VOL. The details of this process will be explained hereinbelow using Fig. 16.

Conversely, when the VOL type of the target logical VOL is a virtual VOL (S702b), the VOL management module M201 references the VOL integrated management table T201, and creates a list (list B) of VOL identifiers of the lower-level common logical VOL (S703).

Thereafter, the path management module M202 temporarily disables access to the lower-level VOL of the target logical VOL such that the lower-level VOL of the target logical VOL is not accessed by way of a logical VOL 18 other than the target logical VOL (that is, the lower-level common logical VOL) (S705). The processing carried out in S705 is substantially the same as the processing of Fig. 12.

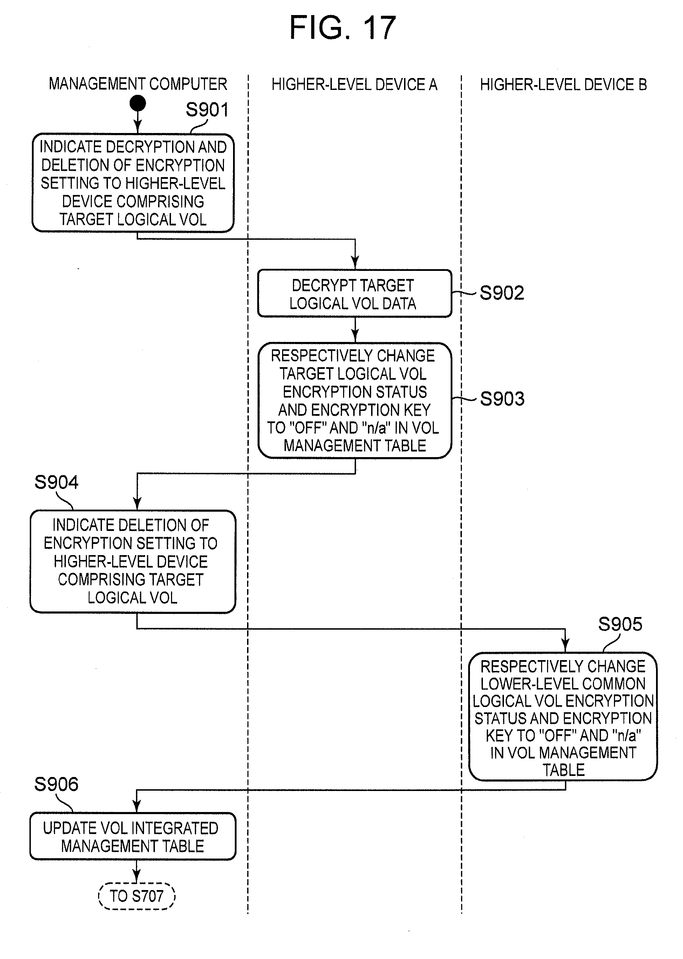

Thereafter, the VOL management module M201 carries out encryption setting deletion processes for the target logical VOL and the lower-level common logical VOL (the logical VOL 18 identified by the VOL identifiers of list B) (S706). This process will be explained in detail hereinbelow using Fig. 17.

Thereafter, the path management module M202 deletes the temporary disable of access to the lower-level VOL of the target logical VOL commenced in S705 (S707). The processing carried out in S707 is substantially the same as the processing of Fig. 14.

Fig. 16 is a flowchart of the encryption setting deletion process for the target logical VOL.

First, the VOL management module M201 of the management computer 20 references the VOL integrated management table T201, specifies the storage device 10, which comprises the target logical VOL (higher-level device), and issues a request to this higher-level device for data decryption and encryption setting deletion (S801). The VOL identifier of the target logical VOL, which is the target of the encryption setting deletion, is notified to the higher-level device together with this request. Furthermore, in explaining the encryption setting deletion process (the processing of Figs. 16 and 17), the explanation will suppose that higher-level device A comprises the target logical VOL, higher-level device B comprises the lower-level common logical VOL, and lower-level device C comprises the lower-level VOL of the target logical VOL, the same as in the case of the encryption setting process.

The encryption control module M102 of higher-level device A, which receives the request for data decryption and the deletion of the encryption setting (the request issued in S801), acquires the value indicating the encryption method of the target logical VOL and the encryption key from the VOL management table T101 of higher-level device A, and uses the encryption method indicated by this acquired value and the acquired encryption key to decrypt the data stored in the target logical VOL (S802).

Thereafter, the encryption control module M102 respectively changes encryption status C14 of the target logical VOL to "OFF", and encryption key C15 to "n/a" in the VOL management table T101 of higher-level device A (S803).

When the data decryption and encryption setting deletion of higher-level device A have been completed, the VOL management module M201 of the management computer 20 changes the target logical VOL encryption status C35 to "OFF" in the VOL integrated management table T201 (S804).

Thereafter, the VOL management module M201 notifies the management client 50 as to whether or not the encryption setting deletion was carried out normally for the target logical VOL (S805). When a failure occurs at any point in time during the processing of Fig. 15, the VOL management module M201 notifies the management client 50 of an error.

Fig. 17 is a flowchart of the encryption setting deletion process for the target logical VOL and the lower-level common logical VOL.

First, the VOL management module M201 of the management computer 20 references the VOL integrated management table T201, specifies the storage device 10, which comprises the target logical VOL (in this example, higher-level device A), and requests that this higher-level device A carry out data decryption and encryption setting deletion (S901). The VOL identifier of the target logical VOL, which is the target of the encryption setting deletion, is notified to higher-level device A together with this request, the same as in S501 of Fig.16.

The encryption control module M102 of higher-level device A, which receives the request for data decryption and the deletion of the encryption setting (the request issued in S901), acquires the value indicating the encryption method of the target logical VOL and the encryption key from the VOL management table T101 of higher-level device A, and uses the encryption method indicated by this acquired value and the acquired encryption key to decrypt the data stored in the target logical VOL (S902). Thereafter, the encryption control module M102 respectively changes target logical VOL encryption status C14 to "OFF", and encryption key C15 to "n/a" in the VOL management table T101 of higher-level device A (S903).

Next, the VOL management module M201 of the management computer 20 requests that the higher-level device (in this example, higher-level device B), which comprises the lower-level common logical VOL, delete the encryption setting for the lower-level common logical VOL (S904). The VOL identifier of the lower-level common logical VOL, which is the target of the encryption setting deletion, is notified to higher-level device B together with this request.

The encryption control module M102 of higher-level device B, which receives the encryption setting deletion request (the request issued in S904), respectively changes lower-level common logical VOL encryption status C14 to "OFF", and encryption key C15 to "n/a" in the VOL management table T101 of higher-level device B (S905).

When the data decryption and encryption setting deletion of higher-level device A, and the encryption setting deletion of higher-level device B have been completed, the VOL management module M201 of the management computer 20 changes the target logical VOL and lower-level common logical VOL encryption status C35 to "OFF" in the VOL integrated management table T201 (S906).

When there is a plurality of lower-level common logical VOL (when the size of list B is one or more), the processing of S904 through S906 is executed repeatedly for all the lower-level common logical VOL.

Thereafter, the storage management program P20 executes the processing of S707.

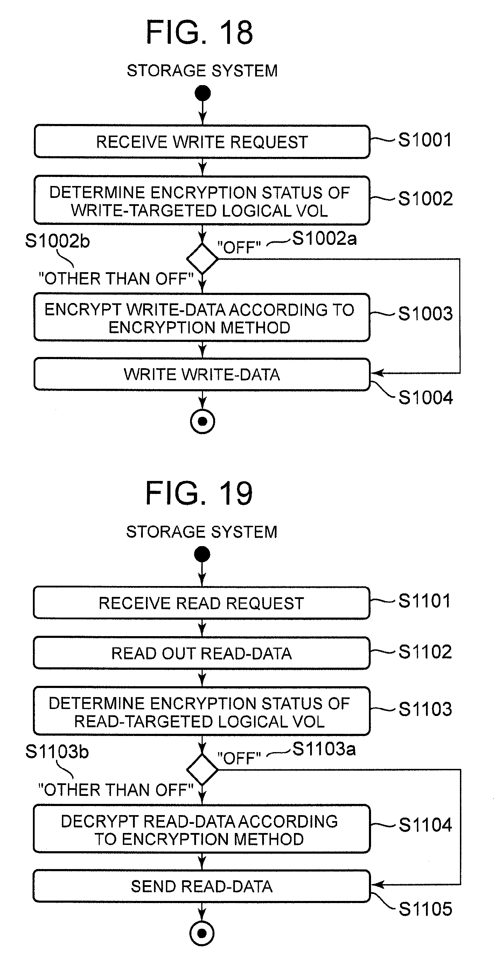

Fig. 18 is a flowchart of the processing when the storage device 10 receives a write request from the host computer 30.

When the storage device 10 (higher-level device) receives a write request from the host computer 30 (S1001), the higher-level device storage control module M101 references the VOL management table T101 and acquires the value set in encryption status C14 of the write-targeted logical VOL 18 (S1002), The storage control module M101 determines this acquired value.

When encryption status C14 is set to "OFF" (S1002a), the storage control module M101 writes the write-targeted data received together with the write request as-is to the write-targeted logical VOL 18 (S1004). Conversely, when a value other than "OFF" is set in encryption status C14 (S1002b), the encryption control module M102 uses the encryption method set in encryption status C14 and the encryption key set in encryption key C15 to encrypt the write-targeted data received together with the write request (S1003).

Thereafter, the storage control module M101 writes this encrypted data to the write-targeted logical VOL 18 (S1004).

According to the above processing, when an encryption setting has been set for the write-targeted logical VOL 18, the write-targeted data is written to the write-targeted logical VOL 18 subsequent to encryption.

Fig. 19 is a flowchart of the processing when the storage device 10 receives a read request from the host computer 30.

When the storage device 10 (higher-level device) receives a read request from the host computer 30 (S1101), the higher-level device storage control module M101 reads out the read-targeted data from the read-targeted logical VOL 18 (S1102).

Next, the storage control module M101 references the VOL management table T101, and acquires the value set in the read-targeted logical VOL 18 encryption status C14 (S1103). The storage control module M101 determines this acquired value.

When encryption status C14 is set to "OFF" (S1103a), the storage control module M101 sends the data read out from the read-targeted logical VOL 18 as-is to the host computer 30 (S1105).

Conversely, when a value other than "OFF" is set in encryption status C14 (S1003b), the storage control module M101 uses the encryption method set in encryption status C14 and the encryption key set in encryption key C15 to decrypt the data read out from the read-targeted logical VOL 18 (S1104).

Thereafter, the storage control module M101 sends this decrypted data to the host computer 30 (S1105).

According to the above processing, when an encryption setting has been set for the read-targeted logical VOL 18, the read-targeted data is sent to the host computer 30 subsequent to being read out from the read-targeted logical VOL 18 and decrypted.

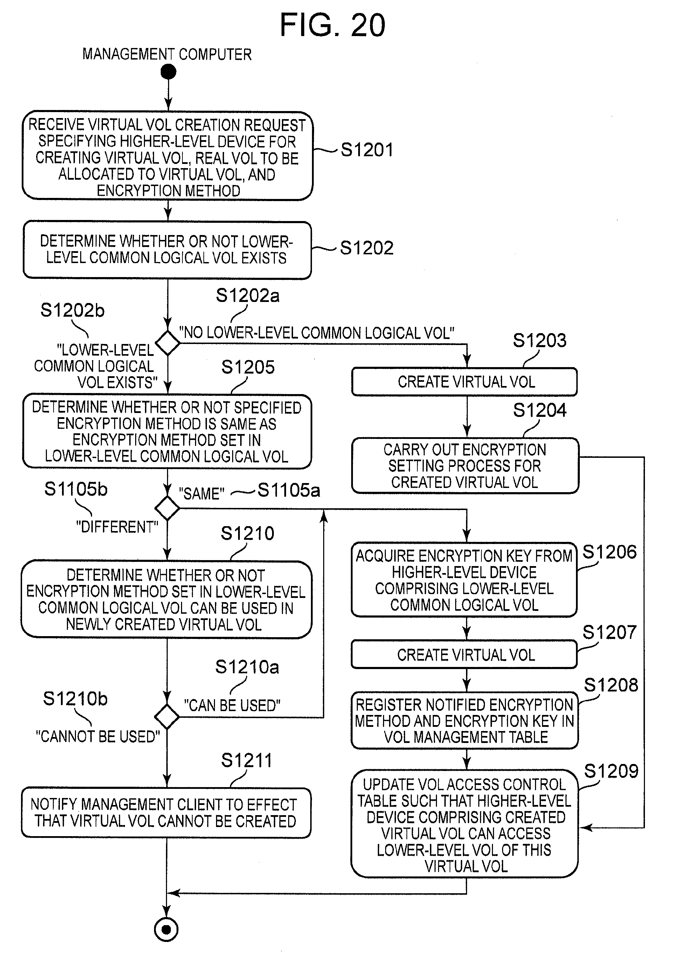

Fig. 20 is a flowchart of the processing when a new virtual VOL is created in any higher-level device.

The virtual VOL new creation process of Fig. 20 is commenced by the user issuing a virtual VOL new creation indication to the management client 50. The virtual VOL new creation indication specifies as parameters, for example, the identifier of the higher-level device, which will create the virtual VOL; the VOL identifier of the real VOL to be allocated to this virtual VOL (also comprising the identifier of the lower-level device, which comprises this real VOL); and the value indicating the encryption method to be used in the encryption process for this virtual VOL. The management client 50, which receives the virtual VOL new creation indication, sends a virtual VOL new creation request to the management computer 20 together with the specified parameters. Hereinafter, in Fig. 20, the newly created virtual VOL will be called the "newly created VOL", the higher-level device in which the newly created VOL is created will be called the "specified higher-level device", and the encryption method, which is used in the encryption process for the newly created VOL will be called the "specified encryption method". Further, in Fig. 20, the real VOL, which is allocated to the newly created VOL, will be called the "specified lower-level VOL", and a logical VOL 18 other than the newly created VOL, which has the specified lower-level VOL and a lower-level VOL, will be called the "lower-level common logical VOL".

When the management computer 20 receives the new virtual VOL creation request (S1201), the VOL management module M201 references the VOL integrated management table T201, and determines whether or not there is a logical VOL 18 other than the newly created VOL (that is, the lower-level common logical VOL), which has the specified lower-level VOL as the lower-level VOL (S1202).

When there are no lower-level common logical VOL (S1202a), the VOL management module M201 issues an indication to the specified higher-level device for the creation of the newly created VOL; an encryption setting for this created newly created VOL; and the encryption of data to be stored in this created newly created VOL. The VOL identifier of the specified lower-level VOL, and the value indicating the encryption method (here, the specified encryption method) to be used in the encryption process for the newly created VOL are notified to the specified higher-level device together with this indication.

The storage control module M101 of the specified higher-level device, which receives the indication (the indication for the creation of the newly created VOL, the encryption setting for this created newly created VOL, and the encryption of the data to be stored in this created newly created VOL) from the VOL management module M201, creates the newly created VOL by allocating the specified lower-level VOL (S1203). In S1203, information related to the newly created VOL is registered in the VOL management table T101.

Thereafter, the encryption control module M102 of the specified higher-level device carries out an encryption setting process for the newly created VOL created in S1203 (S1204). The processing carried out in S1203 is substantially the same as the processing of S202 through S204 of Fig. 10. Furthermore, the updating of the VOL integrated management table T201 is also carried out the same as in S205 of Fig. 10. Thereafter, the processing of S1209 is carried out.

Conversely, when a lower-level common logical VOL exists (S1202b), the VOL management module M201 acquires the value indicating the encryption method (hereinafter, the "set encryption method"), which is currently set in the lower-level common logical VOL, from the VOL integrated management table T201. Then, the VOL management module M201 determines whether or not this acquired encryption method (set encryption method) is the same as the user-specified encryption method (specified encryption method) (S1205).

When the set encryption method and the specified encryption method are the same (S1205a), the VOL management module M201 acquires the encryption key to be used in the encryption process for the lower-level common logical VOL from the higher-level device, which comprises the lower-level common logical VOL (S1206). Then, the VOL management module M201 issues an indication to the specified higher-level device for the creation of a newly created VOL, and the encryption setting for this created newly created VOL. The VOL identifier of the specified lower-level VOL, the value indicating the encryption method (here, the specified encryption method) to be used in the encryption process for the newly created VOL, and the encryption key acquired from the higher-level device comprising the lower-level common logical VOL are notified to the specified higher-level device together with this indication.

The storage control module M101 of the specified higher-level device, which receives the indication (the indication for the creation of a newly created VOL, and the encryption setting for this created newly created VOL) from the VOL management module M201 creates the newly created VOL by allocating the specified lower-level VOL (S1207). In S1207, information related to the newly created VOL is registered in the VOL management table T101.

Thereafter, the encryption control module M102 of the specified higher-level device respectively sets the value indicating the encryption method notified from the management computer 20 in encryption status C14 of the newly created VOL, and the encryption key acquired from the higher-level device comprising the lower-level common logical VOL in encryption key C15 in the VOL management table T101 (S1208).

In S1209, the access control module M103 of the lower-level device, which comprises the specified lower-level VOL, updates the VOL access control table T102 to contents that enable the specified higher-level device to access the specified lower-level VOL. More specifically, the access control module M103 adds the identifier of the specified higher-level device to access permitted C22 of the specified lower-level VOL in the VOL access control table T102.

Conversely, when the set encryption method and the specified encryption method are not the same (S1205b), the following processing is carried out due to the risk of the original data being destroyed if the specified encryption method specified by the user is used as-is.

That is, the VOL management module M201 determines whether or not the set encryption method can be used in the encryption process for the newly created VOL (S1210).

When the set encryption method can be used (S1210a), the same processing as S1206 through S1209 is carried out. In so doing, the encryption method used in the encryption process for the newly created VOL is the set encryption method, which has been set in the lower-level common logical VOL, rather than the specified encryption method specified by the user. That is, upon issuing the indication to the specified higher-level device for the creation of the newly created VOL, and the encryption setting for this created newly created VOL, the VOL management module M201 notifies the specified higher-level device of the set encryption method to be used in the encryption process for the newly created VOL together with this indication.

Conversely, when the set encryption method cannot be used (S1210b), the VOL management module M201 notifies the management client 50 to the effect that a newly created VOL cannot be created (S1211).

Furthermore, in this embodiment, when the set encryption method and the specified encryption method differ, the set encryption method is utilized, but this does not necessarily have to be the case. For example, the present invention can check with the user to determine whether or not to change the encryption method to be used, and the user can once again specify the encryption method to be used.

Carrying out the processing of Fig. 20 makes adjustments such that the same encryption method and encryption key are set for the newly created VOL and the lower-level common logical VOL when there is an existing logical VOL 18 (lower-level common logical VOL), which has the lower-level VOL (specified lower-level VOL) allocated to the newly created VOL as the lower-level VOL. Consequently, it becomes possible to prevent the data stored in the specified lower-level VOL, which is allocated to the newly created VOL, from being destroyed.

The numerous embodiments of the present invention described hereinabove are examples for explaining the present invention, and do not purport to limit the scope of the present invention solely to these embodiments. The present invention can be put into practice in a variety of different modes without departing from the gist thereof.

In this embodiment, the present invention was explained giving an example in which the respective logical VOL 18 comprised in a plurality of higher-level devices have the same logical VOL 18 as the lower-level VOL, but a different configuration than this can also be used. For example, the configuration can be such that a synchronous copy is carried out between the respective logical VOL 18 comprised in the plurality of higher-level devices. This is because the respective data of the logical VOL 18 in the copy-pair relationship are maintained identically, and can thereby substantially be viewed as the same data being accessed from a plurality of devices.

Further, an example in which each of a plurality of higher-level devices accesses the logical VOL 18 of a single lower-level device was also explained, but the host computer 30 or a NAS head can be substituted for the higher-level device. In this case, the virtual VOL of this embodiment is equivalent to either the real VOL of the host computer 30 or the logical VOL 18 used by the NAS head, and the encryption control module M102 becomes a program that runs on either the host computer 30 or the NAS head.

Further, in this embodiment, an encryption setting is possible in logical VOL 18 units, but the encryption setting can also be set in a different granularity, such as making it one of the settings in the storage device 10.

Further, in this embodiment, only the encryption setting and deletion of the encryption setting were explained, but the present invention can also be applied to the re-creation of the encryption key. When the encryption key is re-created, the same processing as that of the encryption setting, whereby encryption processing is carried out anew, is implemented.

Further, in this embodiment, a logical VOL 18 (real VOL), which is allocated to a plurality of logical VOL 18 (virtual VOL) is comprised in a lower-level device, but this logical VOL 18 (real VOL) can also be comprised in any of the higher-level devices comprising the plurality of logical VOL 18 (virtual VOL).

## Claims

1. A controller, comprising:
a first determination unit for carrying out a first determination as to whether or not data stored in a target logical volume can be utilized by a plurality of access devices;
a second determination unit, which, when a result of said first determination is affirmative, carries out a second determination as to whether or not the access devices comprise data encryption units respectively; and
a setting controller for controlling a setting related to said target logical volume for one access device of said plurality of access devices, based on a result of said second determination.

2. The controller according to Claim 1, further comprising a setting request receiver for receiving an encryption setting request for carrying out, for said one access device, an encryption setting for encrypting the data to be stored in said target logical volume,
wherein, when said setting request receiver receives said encryption setting request, and the result of said second determination is that other access device of said plurality of access devices comprises a data encryption unit, said setting controller sends to said one access device and to said other access device an indication for setting said encryption setting for said one access device and said other access device.

3. The controller according to Claim 2, further comprising a storage unit for storing, in each access device, information indicating an employable encryption method,
wherein said second determination unit, determines whether or not said other access device can employ the same encryption method as the encryption method that said one access device employs for data encryption in accordance with the encryption setting set in said one access device, in addition to whether or not the access devices comprise data encryption units respectively, and
when said second determination result is a prescribed result, said setting controller sends to said one access device and to said other access device an indication to set encryption settings, for said one access device and said other access device, for encrypting data stored in said target logical volume in use of said same encryption method,
said prescribed result being a determination result signifying that said other access device comprises a data encryption unit, and that said other access device can use the same encryption method as the encryption method that said one access device uses for data encryption in accordance with the encryption setting set in said one access device.

4. The controller according to any one of Claims 1 through 3, further comprising a first access controller,
wherein, when said second determination result is that said other access device does not comprise a data encryption unit, said first access controller sends to said other access device a processing indication for making access to said target logical volume from said other access device impossible.

5. The controller according to any one of Claims 1 through 4, further comprising a second access controller, wherein said second access controller sends to said other access device a processing indication for making access to said target logical volume from said other access device impossible while said one access device is encrypting data stored in said target logical volume.

6. The controller according to any one of Claims 1 through 5, wherein said access device can comprise a virtual volume to which said target logical volume is allocated, and
said access device can set an encryption setting for encrypting the data to be stored in said target logical volume for each of said virtual volumes,
said controller further comprising a setting request receiver for receiving an encryption setting request that requests of said one virtual volume which said one access device comprises that said encryption setting be set,
said first determination unit determining whether or not said target logical volume is allocated to the virtual volumes said plurality of access devices respectively comprise,
said second determination unit determining whether or not said encryption setting can be set for the virtual volumes, which said plurality of access devices respectively comprise, and to which said target logical volume is allocated, and
when said setting request receiver receives said encryption setting request and the result of said second determination is that said encryption setting can be set for the other virtual volume, which other access device from among said plurality of access devices comprises, and to which said target logical volume is allocated, said setting controller sending to said one access device and to said other access device an indication for setting said encryption setting for said one virtual volume and said other virtual volume.

7. The controller according to any one of Claims 1 through 5, wherein
said access device can comprise a virtual volume
to which said target logical volume is allocated, and
said access device can set an encryption setting for encrypting the data to be stored in said target logical volume for each of said virtual volumes,
said controller further comprising a setting request receiver for receiving a virtual volume creation request for creating one virtual volume, to which said target logical volume is allocated, in said one access device,
said first determination unit determining whether or not said target logical volume is allocated to the virtual volumes said plurality of access devices respectively comprise,
said second determination unit determining whether or not said encryption setting can be set for said one virtual volume to be created in said one access device, and the other virtual volume, which said other access device comprises, and to which said target logical volume is allocated, and
when said setting request receiver receives said virtual volume creation request, and the result of said second determination is that said encryption setting can be set for said one virtual volume and said other virtual volume, said setting controller sending to said one access device an indication to create said one virtual volume, and an indication to set said encryption setting for said one virtual volume, and sends to said other access device an indication to set said encryption setting for said other virtual volume.

8. A control method comprising the steps of:
carrying out a first determination as to whether or not data stored in a target logical volume can be utilized by a plurality of access devices;
carrying out a second determination as to whether or not the access devices comprise data encryption units respectively when a result of said first determination is affirmative; and
controlling a setting related to said target logical volume for one access device of said plurality of access devices, based on a result of said second determination.

9. The control method according to Claim 8, further comprising the steps of:
receiving an encryption setting request for requesting of said one access device that an encryption setting for encrypting the data to be stored in said target logical volume be carried out; and
sending, when said encryption setting request is received and the result of said second determination is that the other access device of said plurality of access devices comprises a data encryption unit, to said one access device and to said other access device an indication to set said encryption setting for said one access device and said other access device.

10. The control method according to Claim 9, further comprising a step of storing in each access device information indicating an employable encryption method,
said second determination being determinations as to whether or not the access devices comprise data encryption units respectively, and whether or not said other access device can employ the same encryption method as the encryption method that said one access device employs for data encryption in accordance with the encryption setting set in said one access device,
the control method further comprising a step of sending to said one access device and to said other access device an indication to set encryption settings for said one access device and said other access device for encrypting data stored in said target logical volume in use of said same encryption method when said second determination result is a prescribed result,
said prescribed result being a determination result signifying that said other access device comprises a data encryption unit, and that said other access device can employ the same encryption method as the encryption method that said one access device employs for data encryption in accordance with the encryption setting set in said one access device.

11. The control method according to any one of Claims 8 through 10, further comprising a step of sending to said other access device a processing indication for making access to said target logical volume from said other access device impossible when said second determination result is that that said other access device does not comprise a data encryption unit.

12. The control method according to any one of Claims 8 through 11, further comprising a step of sending to said other access device a processing indication for making access to said target logical volume from said other access device impossible while said one access device is encrypting the data stored in said target logical volume.

13. The control method according to any one of Claims 8 through 12, wherein said access device can comprise a virtual volume to which said target logical volume is to be allocated, and
said access device can set an encryption setting for encrypting the data to be stored in said target logical volume for each of said virtual volumes,
said first determination is a determination as to whether or not said target logical volume is allocated to the virtual volumes said plurality of access devices respectively comprise,
said second determination is a determination as to whether or not said encryption setting can be set for the virtual volumes, which said plurality of access devices respectively comprise, and to which said target logical volume is allocated, an encryption setting request, requesting of said one virtual volume which said one access device comprises that said encryption setting be carried, is received, and
an indication to set said encryption setting for said one virtual volume and said other virtual volume is sent to said one access device and to said other access device when said encryption setting request is received and the result of said second determination is that said encryption setting can be set for the other virtual volume, which the other access device from among said plurality of access devices comprises, and to which said target logical volume is allocated.

14. The control method according to any one of Claims 8 through 13, wherein said access device can comprise a virtual volume to which said target logical volume is to be allocated, and
said access device can set an encryption setting for encrypting the data to be stored in said target logical volume for each of said virtual volumes,
said first determination is a determination as to whether or not said target logical volume is allocated to the virtual volumes said plurality of access devices respectively comprise,
said second determination is a determination as to whether or not said encryption setting can be set for said one virtual volume to be created in said one access device, and for the other virtual volume, which said other access devices comprises, and to which said target logical volume is allocated,
a virtual volume creation request for creating in said one access device one virtual volume, to which said target logical volume is allocated, is received, and
to said one access device, an indication for creating said one virtual volume, and an indication for setting said encryption setting for said one virtual volume are sent, and to said other access device an indication for setting said encryption setting for said other virtual volume is sent, when said virtual volume creation request is received and the result of said second determination is that said encryption setting can be set for said one virtual volume and said other virtual volume.
